# FASCICULE DE BREVET EUROPEEN

(11) **EP 1 114 075 B1**
(45) Date de publication et mention de la délivrance du brevet: **18.09.2002**
(21) Numéro de dépôt: 99934793.3
(22) Date de dépôt: 28.07.1999
(51) Int. Cl.: C08G 18/79, C08G 18/80, C08G 18/72

(54) **COMPOSITION ISOCYANATE COMPORTANT UN ISOCYANATE ALIPHATIQUE MASQUE ET UN ISOCYANATE NON MASQUE ET LEUR UTILISATION DANS UN REVETEMENT**
ISOCYANATZUSAMMENSETZUNG, DIE EIN ALIPHATISCHES, BLOCKIERTES ISOCYANAT UND EIN NICHT BLOCKIERTES ISOCYANAT ENTHÄLT UND IHRE VERWENDUNG ZUR BESCHICHTUNG
ISOCYANATE COMPOSITION CONTAINING A BLOCKED ALIPHATIC ISOCYANATE AND A NON-BLOCKED ISOCYANATE AND THEIR USE IN COATING

(30) Priorité: 29.07.1998 FR 9809699
(43) Date de publication de la demande: 11.07.2001
(73) Titulaire: RHODIA CHIMIE, 92408 Courbevoie Cédex (FR)
(72) Inventeur: BERNARD, Jean-Marie, 69440 Mornant (FR); VOGIN, Bernard, F-69630 Chaponost (FR)
(74) Mandataire: Ricalens, François
(86) Numéro de dépôt international: FR9901858
(87) Numéro de publication internationale: WO00006626

(56) Documents cités:
- EP-A- 0 047 452
- EP-A- 0 286 799
- EP-A- 0 816 411
- EP-A- 0 822 210
- DE-A- 19 611 821
- CHEMICAL ABSTRACTS, vol. 105, no. 8, août 1986 (1986-08) Columbus, Ohio, US; abstract no. 61507d, KASE ET AL: "diol-modified polyisocyanurate oligomers" page 39; colonne 2; XP002099861 & JP 06 112678 A (DAINIPPON INK AND CHEMICALS)

## Description

La présente invention a pour objet une nouvelle famille de compositions isocyanates comportant à la fois des isocyanates masqués et des isocyanates non masqués. Elle concerne plus particulièrement les compositions isocyanates en vue de leur utilisation sous forme de poudre, y compris sous forme de mélange de poudres, plus spécifiquement pour former des poudres de peinture dites monocomposant (parfois désignées par leur appellation anglaise "one shot").

Pour des raisons liées à la protection de l'environnement et à la sécurité du travail, on cherche à éliminer de plus en plus dans les techniques de revêtement, et notamment de peinture, l'utilisation des solvants. Plus particulièrement, la diminution des C.O.V. (composés organiques volatils) est une préoccupation de plus en plus actuelle dans l'industrie des peintures et des vernis.

Dans ce but, l'évolution des produits vers de plus hauts extraits secs permet de diminuer les quantités de solvant nécessaires pour atteindre la viscosité d'application et donc réduire les solvants évaporés lors du séchage du film de peinture.

Une alternative à cette technique est l'utilisation de produits en phase aqueuse où l'eau a remplacé les solvants organiques comme agent véhiculant le liant organique. Toutefois, une quantité de solvant organique, certes faible, reste nécessaire à la mise en oeuvre et à la formation du film de peinture. De plus ils engendrent des résidus solubles dans l'eau dont le traitement peut être délicat et coûteux.

Dans ce contexte, des techniques de revêtement au moyen de poudre se développent de plus en plus. Il convient ici de détailler un peu cette technique pour mieux appréhender la présente invention.

La technique met en oeuvre un matériau pulvérulent de très grande finesse pour lequel l'air va jouer le rôle de vecteur.

En général une charge électrostatique de plusieurs kilovolts appliquée entre un pistolet et la pièce à peindre va permettre d'attirer et de retenir la poudre précurseur du revêtement, poudre qui sera projetée par le pistolet d'application.

Une fois recouverte de poudre, la pièce est soumise à une cuisson généralement à une température comprise entre 150 et 200°C, cuisson qui permet la fusion, l'étalement puis la réticulation de la poudre de peinture afin d'obtenir une couche uniforme et homogène du revêtement. Ici et dans la suite de la description, la peinture sera considérée comme le paradigme des revêtements.

Cette technique est non polluante et présente un rendement d'application voisin de 100% grâce à la possibilité de recyclage de la poudre non utilisée. Pour plus de détails sur les techniques de peinture en poudre, on peut se référer aux ouvrages suivants :
P. GRANDOU et P. PASTOUR: PEINTURES ET VERNIS:
   - I. les constituants
   - II. technique et industries ; Edition Hermann ;
R. LAMBOURNE:
   Paints and Surface Coatings. Theory and practice; Edition Halsted press;
POWDER COATING, THE COMPLETE FINISHER HANDBOOK; the Powder coating institute;
MYERS and LONG;
   TREATISE ON COATINGS, 5 Volumes ; Edition Marcel DEKKER.

Parmi les familles de produits qui peuvent être mises en oeuvre dans le domaine des poudres, il convient de mentionner les suivantes. La majorité du marché est occupée par les teintures poudre dites "hybrides" époxypolyesters, suivies des polyesters, des polyuréthannes puis des poudres dites "époxy". Si l'on désire une tenue en extérieur de qualité (notamment vis-à-vis des agressions actiniques et de l'atmosphère), il convient alors d'utiliser les revêtements à base de TGIC-polyester ou bien de polyuréthanne qui, seuls permettent d'atteindre les performances usuellement requises.

Toutefois, le système TGIC-polyester est réputé toxique et des contraintes d'ordre réglementaire sont sur le point d'en limiter très largement l'usage.

En ce qui concerne les polyuréthannes, les seuls produits poudre actuellement sur le marché sont des produits qui sont issus d'un système dont le réticulant est un isocyanate masqué par le caprolactame d'un type très particulier, à savoir les dérivés de l'IPDI.

Toutefois, l'utilisation comme réticulant ou durcisseur, de dérivés de l'IPDI ne conduit pas toujours à des produits de bonne qualité mécanique. Dans une demande de brevet antérieure (EP 680 984) la Demanderesse décrit un système d'agent bloquant qui permet d'élargir significativement la famille des isocyanates aliphatiques qui sont susceptibles de donner des produits solides avec une Tg (température de transition vitreuse) suffisante pour permettre l'utilisation dans les applications poudre.

Cette technique a conduit, avec la collaboration de la société catalane RESISA (devenue Cray Valley Ibérica), à un système de peinture mate ou satinée particulièrement performant (voir la demande de brevet international publiée sous le n° WO 98/04 608).

Toutefois, pour avoir une température de transition vitreuse suffisante, les produits décrits dans la demande de brevet européen n° EP A 0 680 984, doivent répondre à des contraintes de teneur en fonction isocyanate résiduelle assez strictes.

En outre, les produits décrits dans la demande européenne susmentionnée ne représentent qu'une petite fraction des agents masquants utilisables et qu'il serait agréable de pouvoir employer dans la technique des peintures poudre. Aussi cherche-t-on des techniques qui permettent d'augmenter la température de transition vitreuse des agents réticulants, parfois appelés aussi durcisseurs.

Ainsi, un des buts de la présente invention est de fournir une technique et des compositions qui permettent d'obtenir des compositions isocyanates utilisables en poudre et présentant une température de transition vitreuse qui évite les phénomènes de mottage au cours du transport et du stockage.

Un autre but de la présente invention est de fournir une technique qui permette d'augmenter la température de transition vitreuse des isocyanates aliphatiques masqués de manière à pouvoir les utiliser dans les applications dites "peintures poudre".

Un autre but de la présente invention est de fournir des mélanges isocyanates dont la Tg soit au moins égale à 20°C (avantageusement deux chiffres significatifs), de préférence à 25°C, plus préférentiellement à 30°C.

Un autre but de la présente invention est de fournir des compositions isocyanates susceptibles de présenter des teneurs en isocyanates libres élevées et utilisables en peinture poudre.

Ces buts et d'autres qui apparaîtront par la suite sont atteints au moyen d'une composition isocyanate comportant à la fois un composé isocyanate masqué et un composé isocyanate cycloaliphatique non masqué.

La présente invention repose sur une double constatation, à savoir qu'il est possible d'utiliser des isocyanates présentant des fonctions isocyanates libres en peinture poudre et ce sans condition opératoire contraignante, dès lors qu'ils sont mélangés avec des fonctions isocyanates masquées en quantité significative.

L'autre constatation est que l'augmentation de teneur en isocyanates libres permet dans certaines conditions d'augmenter significativement la température de transition vitreuse.

Ces deux constatations sont particulièrement surprenantes pour l'homme du métier.

L'invention est particulièrement intéressante dans le cas des isocyanates masqués à caractère aliphatique. Dans la présente description, on considère comme aliphatique toute fonction isocyanate dont l'atome d'azote est relié à un atome de carbone d'hybridation sp³.

Selon la présente invention, l'isocyanate masqué, pur ou en mélange, est issu d'un polyisocyanate, c'est-à-dire possédant au moins deux fonctions isocyanates, avantageusement plus de deux (possibilité de valeur fractionnaire puisqu'il s'agit en général de mélange d'oligomères plus ou moins condensé), lequel est lui-même le plus souvent issu d'une précondensation ou d'une prépolymérisation de diisocyanates unitaires (parfois ces diisocyanates unitaires sont désignés dans la présente description par le terme de monomères).

Ces prépolymères et ces précondensats sont bien connus de l'homme de métier et l'on peut indiquer que d'une manière générale, la masse moléculaire moyenne (M_{w}) de ces prépolymères ou de ces précondensats est faible et est en général au plus égale à 2 000 (un chiffre significatif), plus couramment à 1 000 (un chiffre significatif, de préférence deux). Ainsi, parmi les polyisocyanates utilisés pour synthétiser les isocyanates masqués selon l'invention, on peut citer ceux du type biuret et ceux dont la réaction de di- ou trimérisation a conduit à des cycles à 4, 5 ou 6 chaînons. Parmi les cycles à 6, on peut citer les cycles isocyanuriques issus d'une homo- ou d'une hétérotrimérisation de divers diisocyanates seuls, avec d'autres isocyanates ou avec du gaz carbonique (ou dioxyde de carbone) ; dans ce cas on remplace un azote du cycle isocyanurique par un oxygène. Les oligomères à cycle isocyanurique sont préférés. Les polyisocyanates préférés sont ceux qui présentent au moins une fonction isocyanate aliphatique, avantageusement deux, de préférence toutes.

Parmi les fonctions isocyanates masquées selon l'invention, celles qui sont reliées au squelette par l'intermédiaire d'un carbone aliphatique (c'est-à-dire de type sp³) portant un atome d'hydrogène, avantageusement deux sont préférées.

Il est également souhaitable que ledit carbone de type sp³ soit lui-même porté par un carbone de type sp³, lui-même étant également porteur de un ou de préférence de deux atomes d'hydrogène, et ce pour éviter que la fonction isocyanate considérée soit en position néopentylique.

En d'autres termes, il est conseillé de choisir comme monomères (lesquels sont en général porteurs de deux fonctions isocyanates) au moins un composé qui porte au moins une fonction aliphatique qui ne soit ni secondaire, ni tertiaire, ni néopentylique.

Le problème des isocyanates masqués présentant une température de transition vitreuse particulièrement basse, est particulièrement aigu dans le cas où l'on utilise des monomères qui présentent une grande liberté conformationnelle et de grandes libertés de rotation.

C'est le cas des monomères qui présentent des enchaînements polyméthylène (CH₂)_{π} où π représente un entier de 2 à 10, avantageusement de 4 à 8. Ces enchaînements polyméthylène sont cause d'excellentes propriétés mécaniques. Il est en outre souhaitable que l'un au moins, de préférence tous, ces enchaînements soient libres en rotation et donc exocycliques.

En cas de mélange obtenu à partir de plusieurs (en général, deux) types de monomères, il est préférable que celui ou ceux des monomères qui réponde aux conditions ci-dessus et notamment à la condition sur la présence d'enchaînements polyméthylène (CH₂)π représente au moins un tiers, avantageusement un demi, de préférence deux tiers des fonctions isocyanates masquées.

Bien entendu, les résultats sont particulièrement bons lorsque la totalité du monomère utilisé présente cette caractéristique de posséder des enchaînements polyméthylène.

Les contraintes ci-dessus sont applicables aussi bien en cas de prépolymères ou de précondensats obtenus à partir de mélange de monomères que de prépolymères et de précondensats obtenus par mélange simple de prépolymères et de précondensats.

La présente invention est particulièrement intéressante pour les isocyanates masqués dont la Tg est au plus égale à 40°C, avantageusement au plus égale à 30°C, préférentiellement au plus égale à 20°C, plus préférentiellement inférieure à 20°C.

Ainsi, la présente invention est particulièrement intéressante pour les isocyanates masqués qui ne présentent pas de fonctions isocyanates masquées qui soient portées par un carbone cycloaliphatique endocyclique. En effet, souvent, ces isocyanates masqués présentent naturellement des températures de transition vitreuse supérieures à celles des isocyanates masqués non cycloaliphatiques, notamment issus de polyméthylènediisocyanate.

Ainsi, l'invention présente de nombreux intérêts pour les dérivés des polyméthylènediisocyanates parmi lesquels on peut citer l'hexaméthylène-diisocyanate, le tétraméthylènediisocyanate et un isomère de l'hexaméthylène-diisocyanate, à savoir le pentaméthylènediisocyanate substitué par un méthyle.

Les isocyanates masqués sont issus des isocyanates libres par réaction avec divers agents de masquage.

Les agents de masquage convenant particulièrement à la présente invention sont ceux qui dans le test à l'octanol présentent une température de libération au moins égale à 100°C, avantageusement à 110°C, de préférence à 120°C. La température de libération est avantageusement au plus égale à 200°C, de préférence à 180°C.

Les isocyanates masqués selon la présente invention peuvent l'être par plusieurs agents de masquage. Parmi les agents de masquage, il convient de citer le triazole, ses dérivés et les divers composés mentionnés dans les brevets cités dans la présente demande.

Les isocyanates non masqués selon la présente invention présentent un cycle aliphatique. Il est également souhaitable qu'ils soient choisis parmi des composés dont la température de transition vitreuse soit au moins égale à 40°C.

Les composés convenant particulièrement bien sont les oligomères ou les oligocondensats des monomères cycloaliphatiques, c'est-à-dire dont le squelette comporte un cycle aliphatique. Parmi ces produits, ceux qui sont préférés sont ceux qui sont issus de l'homo- ou de l'hétéro- trimérisation d'un monomère cycloaliphatique.

Ces monomères sont avantageusement tels qu'au moins l'une, avantageusement les deux fonctions isocyanates, soit distante du cycle le plus proche d'au plus un carbone et de préférence est reliée directement à lui. En outre, ces monomères cycloaliphatiques présentent avantageusement au moins une, de préférence deux fonctions isocyanates choisies parmi les fonctions isocyanates secondaire, tertiaire ou néopentylique.

Les meilleurs résultats sont obtenus quand la liberté conformationnelle du monomère cycloaliphatique est faible. Comme monomères susceptibles de donner de bons résultats, on peut citer à titre d'exemple, et même de paradigme, les monomères suivants:
◆ les composés correspondant à l'hydrogénation du ou des noyaux aromatiques porteurs des fonctions isocyanates de monomère d'isocyanates aromatiques et notamment du TDI (toluène diisocyanate) et des diisocyanato-biphényles, le composé connu sous le sigle H₁₂MDI et les divers BIC (Bis(iaocyanato-méthyl cyclohexane)]; et surtout
◆ le norbomanediisocyanate souvent appelé par son sigle NBDI;
◆ l'isophoronediisocyanate ou IPDI ou 3-isocyanatométhyl-3,5,5-triméthylcyclohexylisocyanate.

Pour obtenir un effet sur l'augmentation de température de transition vitreuse de la composition, il est préférable que le rapport (IL/IM) en masse entre le(s) composé(s) isocyanate(s) libre(s) et le(s) composé(s) isocyanate(s) masqué(s) soit au moins égal à 0,1, avantageusement à 0,2, de préférence à 0,3.

En revanche, pour maintenir les qualités liées aux isocyanates masqués (en partie au moins non cycliques), il est préférable que le rapport (FIL/FIM) en équivalent entre les fonctions isocyanates libres et les fonctions isocyanates masquées soit au plus égal à 1, avantageusement à 1,0, de préférence à 0,7.

Les compositions selon la présente invention peuvent aisément être préparées par mélange de l'isocyanate libre dans l'isocyanate masqué fondu (voir le mode opératoire des exemples), avantageusement à une température inférieure à celle du déblocage.

La présence de catalyseur de condensation entre les agents de masquage et les isocyanates ne gêne en aucune façon. Cela est particulièrement vrai pour les amines tertiaires (dans un rapport de 0,1 à 5% en équivalent molaire par rapport à la totalité des fonctions isocyanates masquées et non masquées)qui servent souvent de catalyseur.

La présente demande vise aussi l'utilisation selon les techniques spécifiées ci-dessus du composé cycloaliphatique à température de transition vitreuse au moins égale à 40°C pour remonter la température de transition vitreuse d'isocyanates aliphatiques masqués.

### TEST A L'OCTANOL - définitions

- Température de "libération" :: (ou de "déblocage") c'est la température la plus faible à laquelle l'agent de masquage de l'isocyanate masqué est déplacé à hauteur de 9/10 (arrondi mathématique) par un monoalcool primaire (l'alcool primaire est en général l'octanol).
- Durée de vie au stockage :: Pour s'assurer une bonne durée de vie au stockage, il est préférable de choisir des fonctions isocyanates masquées dont le test à l'octanol montre une "libération" à 80°C, avantageusement à 90°C, au plus égale à 90%.
- Avancement de la réaction :: On considère que la réaction est complète si elle est réalisée à plus de 90%.

### MODE OPERATOIRE

Dans un tube, type SCHOTT, avec agitation magnétique, on charge environ 5 mmol en équivalent NCO masqué protégé à évaluer.

On ajoute 2,5 à 3ml de dichloro-1,2-benzène (solvant) l'équivalent d'octanol-1 (5 mmol, soit 0,61g et éventuellement avec le catalyseur à tester avec le groupe masquant).

Le milieu réactionnel est ensuite porté à la température testée. On chauffe alors pendant 6 h à la température testée, de façon à débloquer et ainsi rendre réactives les fonctions isocyanates. La réaction terminée, le solvant est éliminé par distillation sous vide et le résidu est analysé en RMN, masse et infrarouge.

A partir de ces données, on évalue le pourcentage de fonctions isocyanates masquées condensés avec l'octanol-1.

Les exemples non limitatifs suivants illustrent l'invention.

Exemples de synthèses pour poudre avec IPDT NCO libre.

### Exemple 1 - Synthèse de composition de polyisocyanates poudre (HDT bloqué triazole / IPDT (70/30 poids/poids))

Dans un réacteur agité à double enveloppe on ajoute successivement, 290 g d'hexaméthylènediisocyanate trimère (TOLONATE HDT) (titre NCO : 0,521 équivalent/100 g), 107,5 g de 1,2,4-triazole et 3,98 g de triéthylamine (1% en masse sur le total des composée/2,6% molaire par rapport aux fonctions NCO libres de l'HDT). Le milieu réactionnel est chauffé à 95°C. La réaction est exothermique et la température du milieu réactionnel monte à 125°C. La température redescend doucement à 95°C. Après 1h30, l'analyse infrarouge d'un prélèvement indique que toutes les fonctions isocyanates sont bloquées par le triazole. On ajoute alors à 110°C, 170,5g d'isophoronediisocyanate trimère (IPDT) (titre NCO : 0,45 équivalent/100 g). Après un quart d'heure de mélange, le produit est coulé puis broyé pour donner 568 g d'une poudre blanche de Tg 34°C qui est stable au stockage.

La composition comporte donc un polyisocyanate HDT à fonctions isocyanates masquées par un seul agent de blocage et un polyisocyanate cycloaliphatique à fonctions isocyanates libres.

### Exemple 2 - Synthèse de composition de polyisocyanate poudre (HDT bloqué triazole/acide parahydroxybenzoïque (80/20 mol/mol) / IPDT (70/30 poids/poids))

### (TOL 6598)

Dans un réacteur agité de 500 ml à double enveloppe, on ajoute successivement 201,84 g de TOLONATE HDT 58,11 g de 1,2,4-triazole et 33,41 g d'acide parahydroxybenzoïque. Le mélange réactionnel est chauffé à 90°C. Après une heure de réaction, 2,93 g de triéthylamine sont ajoutés. Après 1 h 30, l'analyse infrarouge d'un prélèvement indique que toutes les fonctions isocyanates sont bloquées par le triazole. On ajoute alors à 110°C, 125,73g d'isophoronediisocyanate trimère. Après 1h de mélange, le produit est coulé puis broyé pour donner 420 g d'une poudre blanche de Tg 45°C (soit 20°C de plus que le produit non additionné d'IPDT) qui est stable au stockage.

La composition comporte donc un polyisocyanate HDT à fonctions isocyanates masquées par un mixte d'agent bloquants dont l'un comporte une fonction acide carboxylique et un polyisocyanate cycloaliphatique à fonctions isocyanates libres.

Les spectres d'absorption montrent des fonctions NCO, amide et anhydride.

Tout se passe comme si l'isocyanate masqué protégeait, ou stabilisait, l'isocyanate non masqué.

### Exemple 3 (comparatif) - HDT masqué triazole

Dans un réacteur de 250 ml, on charge successivement
- 107,5 g d'hexaméthylène diisocyanate trimère isocyanurate connu sous le nom commercial HDT dont le titre en fonctions isocyanates (NCO) est de 0,526 mole de fonctions NCO pour 100 g de produit,
- 39,3 g de 1,2,4 triazole (de pureté égale à 99,5%).
Le mélange réactionnel est ensuite chauffé à une température de 130°C et agité. Après 1 h de réaction, l'analyse infrarouge d'un échantillon de masse réactionnelle indique que la réaction de masquage des fonctions isocyanates est terminée. On constate la disparition de bande significative des fonctions isocyanates à 2272 cm-1.
Le produit est alors coulé sur une platine puis laissé refroidir. Le produit est ensuite broyé à une température de -10°C.
A température ambiante, le produit broyé est pégueux (collant comme de la poix) et ne donne pas de poudre qui puisse être manipulable dans les conditions classiques industrielles, notamment à la température ambiante (20°C environ).
La Tg mesurée du produit est de 10°C.

## Revendications

1. Composition isocyanate utile pour les applications en peintures poudre, **caractérisée par le fait qu'**elle comporte un composé isocyanate masqué et un composé isocyanate cycloaliphatique non masqué et **par le fait que** ledit composé isocyanate masqué présente un squelette aliphatique qui comporte dans son squelette au moins un enchaînement di- ou polyméthylène (c'est-à-dire (CH₂)_{π} où π représente un entier de 2 à 10).

2. Composition selon la revendication 1, **caractérisée par le fait que** ledit composé isocyanate masqué est au moins partiellement aliphatique.

3. Composition selon les revendications 1 et 2, **caractérisée par le fait que** ledit composé isocyanate masqué présente un squelette aliphatique qui comporte dans son squelette au moins un enchaînement di- ou polyméthylène libre en rotation .

4. Composition selon les revendications 1 à 3, **caractérisée par le fait que** ledit composé isocyanate masqué ne présente pas de fonctions isocyanate masquées qui soient portées par un carbone cycloaliphatique endocyclique.

5. Composition selon les revendications 1 à 4, **caractérisée par le fait que** ledit composé isocyanate masqué est issu d'un monomère polyméthylènediisocyanate, d'un des (co)oligomères de ce dernier ou d'un de ses (co)oligocondensats ayant une masse moléculaire moyenne au plus égale à 2000.

6. Composition selon la revendication 5, **caractérisée par le fait que** ledit monomère polyméthylènediisocyanate est le tetra, penta, ou hexaméthylènediisocyanate, substitué au plus une fois.

7. Composition selon les revendications 1 à 6, **caractérisée par le fait que** ledit (co)oligomère ou (co)oligocondensat ayant une masse moléculaire moyenne au plus égale à 2000 comporte une ou plusieurs fonctions urétinedione, isocyanurique, biuret, allophanate, carbamate de polyol.

8. Composition selon les revendications 1 à 7, **caractérisée par le fait que** ledit isocyanate cycloaliphatique non masqué présente une Tg au moins égale à 40°C.

9. Composition selon les revendications 1 à 8, **caractérisée par le fait que** ledit isocyanate cycloaliphatique est un oligomère d'un monomère cycloaliphatique ayant une masse moléculaire moyenne au plus égale à 2000.

10. Composition selon les revendications 1 à 9, **caractérisée par le fait que** ledit isocyanate cycloaliphatique est issu de l'homo- ou de l'hétéro- trimérisation d'un monomère cycloaliphatique.

11. Composition selon les revendications 9 et 10, **caractérisée par** le fait ledit monomère cycloaliphatique soit tel que qu'au moins une, avantageusement deux, fonction isocyanate est distante du cycle plus proche d'au plus un carbone, et est de préférence reliée directement à lui.

12. Composition selon les revendications 1 à 11, **caractérisée par le fait que** ledit composé isocyanate non masqué présente au moins une, avantageusement deux, fonction isocyanate est choisie parmi les fonctions isocyanates secondaire, tertiaire ou néopentylique.

13. Composition selon les revendications 1 à 12, **caractérisée par le fait que** le rapport (IL/IM) en masse entre le composé isocyanate libre et le composé isocyanate masqué est au moins égal à 0,1, avantageusement à 0,2, de préférence à 0,3.

14. Composition selon les revendications 1 à 13, **caractérisée par le fait que** le rapport (en équivalent) entre les fonctions isocyanates libres et les fonctions isocyanates masquées est au plus égal à environ 1, avantageusement à 1,0, de préférence à 0,7.

15. Procédé de préparation d'une composition selon les revendications 1 à 14, **caractérisé par le fait que** l'on mélange l'isocyanate libre dans l'isocyanate masqué fondu.

16. Utilisation de composés cycloaliphatiques présentant des fonctions isocyanates libres à température de transition vitreuse (Tg) au moins égale à 40°C, pour remonter la température de transition vitreuse (Tg) d'isocyanates aliphatiques masqués.

17. Utilisation de composition selon les revendications 1 à 14, comme ingrédient d'un revêtement, avantageusement sous forme de poudre.

## Patentansprüche

1. Isocyanatzusammensetzung zur Verwendung in Pulverfarben, **dadurch gekennzeichnet, daß** sie eine maskierte Isocyanatverbindung und eine nichtmaskierte cycloaliphatische Isocyanatverbindung enthält und daß die maskierte Isocyanatverbindung ein aliphatisches Skelett aufweist, wobei das Skelett mindestens eine Di- oder Polymethylenkette (d. h. (CH₂)_{π}, wobei π eine ganze Zahl von 2 bis 10 darstellt) umfaßt.

2. Zusammensetzung nach Anspruch 1, **dadurch gekennzeichnet, daß** die maskierte Isocyanatverbindung mindestens teilweise aliphatisch ist.

3. Zusammensetzung nach Anspruch 1 oder 2, **dadurch gekennzeichnet, daß** die maskierte Isocyanatverbindung ein aliphatisches Skelett aufweist, wobei das Skelett mindestens eine rotierbare Di- oder Polymethylenkette aufweist.

4. Zusammensetzung nach einem der Ansprüche 1 bis 3, **dadurch gekennzeichnet, daß** die maskierte Isocyanatverbindung keine maskierten Isocyanatfunktionen aufweist, die von einem endocyclischen cycloaliphatischen Kohlenstoff getragen werden.

5. Zusammensetzung nach einem der Ansprüche 1 bis 4, **dadurch gekennzeichnet, daß** die maskierte Isocyanatverbindung aus einem Polymethylendiisocyanatmonomer oder einem seiner (Co-)Oligomeren oder (Co-)Oligokondensate mit einer mittleren Molekularmasse von höchstens 2.000 stammt.

6. Zusammensetzung nach Anspruch 5, **dadurch gekennzeichnet, daß** das Polymethylendiisocyanatmonomer ein höchstens einfach substituiertes Tetra-, Penta- oder Hexamethylendiisocyanat ist.

7. Zusammensetzung nach einem der Ansprüche 1 bis 6, **dadurch gekennzeichnet, daß** das (Co-)Oligomer oder (Co-)Oligokondensat mit einer mittleren Molekularmasse von höchstens 2.000 ein oder mehrere Uretindion-, Isocyanur-, Biuret-, Allophanat- oder Polyolcarbamatfunktionen umfaßt.

8. Zusammensetzung nach einem der Ansprüche 1 bis 7, **dadurch gekennzeichnet, daß** das nichtmaskierte cycloaliphatische Isocyanat eine Glasübergangstemperatur (T_{g}) von mindestens 40 °C aufweist.

9. Zusammensetzung nach einem der Ansprüche 1 bis 8, **dadurch gekennzeichnet, daß** das cycloaliphatische Isocyanat ein Oligomer eines cycloaliphatischen Monomers mit einer mittleren Molekularmasse von höchstens 2.000 ist.

10. Zusammensetzung nach einem der Ansprüche 1 bis 9, **dadurch gekennzeichnet, daß** das cycloaliphatische Isocyanat aus der Homo- oder Heterotrimerisierung eines cycloaliphatischen Monomers stammt.

11. Zusammensetzung nach Anspruch 9 oder 10, **dadurch gekennzeichnet, daß** das cycloaliphatische Monomer derart beschaffen ist, daß mindestens eine, vorzugsweise zwei Isocyanatfunktionen vom nächsten Ring höchstens einen Kohlenstoff entfernt ist/sind und vorzugsweise direkt hiermit verbunden ist/sind.

12. Zusammensetzung nach einem der Ansprüche 1 bis 11, **dadurch gekennzeichnet, daß** die nichtmaskierte Isocyanatverbindung mindestens eine, vorzugsweise zwei Isocyanatfunktionen aufweist, die aus sekundären, tertiären oder Neopentylisocyanatfunktionen ausgewählt sind.

13. Zusammensetzung nach einem der Ansprüche 1 bis 12, **dadurch gekennzeichnet, daß** das Verhältnis (FI/MI) zwischen dem freien Isocyanat (FI) und dem maskierten Isocyanat (MI) massenbezogen mindestens 0,1, vorzugsweise 0,2, bevorzugt 0,3, beträgt.

14. Zusammensetzung nach einem der Ansprüche 1 bis 13, **dadurch gekennzeichnet, daß** das Äquivalentverhältnis zwischen den freien Isocyanatfunktionen und den maskierten Isocyanatfunktionen höchstens etwa 1, vorzugsweise 1,0, bevorzugt 0,7, beträgt.

15. Verfahren zur Herstellung einer Verbindung nach einem der Ansprüche 1 bis 14, **dadurch gekennzeichnet, daß** man das freie Isocyanat in das geschmolzene maskierte Isocyanat einmischt.

16. Verwendung von cycloaliphatischen Verbindungen mit freien Isocyanatfunktionen und einer Glasübergangstemperatur (T_{g}) von mindestens 40 °C zur Erhöhung der Glasübergangstemperatur (T_{g}) maskierter aliphatischer Isocyanate.

17. Verwendung einer Zusammensetzung nach den Ansprüchen 1 bis 14 als Bestandteil (Inhaltsstoff) für eine Beschichtung, vorzugsweise in Pulverform.

## Claims

1. Isocyanate composition for use in powder paint applications, **characterized in that** it comprises a masked isocyanate compound and a nonmasked cycloaliphatic isocyanate compound and **in that** the said masked isocyanate compound exhibits an aliphatic backbone which comprises, in its backbone, at least one di- or polymethylene linkage (that is to say (CH₂)_{Π} where Π represents an integer from 2 to 10).

2. Composition according to claim 1, **characterized in that** the said masked isocyanate compound is at least partially aliphatic.

3. Composition according to claims 1 and 2, **characterized in that** the said masked isocyanate compound exhibits an aliphatic backbone which comprises, in its backbone, at least one di- or polymethylene linkage which is free to rotate.

4. Composition according to claims 1 to 3, **characterized in that** the said masked isocyanate compound does not exhibit masked isocyanate functional groups which are carried by an endocyclic cycloaliphatic carbon.

5. Composition according to claims 1 to 4, **characterized in that** the said masked isocyanate compound results from a polymethylene diisocyanate monomer, from one of the (co)oligomers of the latter or from one of its (co)oligocondensates having an average molecular mass at most equal to 2 000.

6. Composition according to claim 5, **characterized in that** the said polymethylene diisocyanate monomer is a tetra-, penta- or hexamethylene diisocyanate, substituted at the most once.

7. Composition according to claims 1 to 6, **characterized in that** the said (co)oligomer or (co)oligocondensate having an average molecular mass at most equal to 2 000 comprises one or more uretinedione, isocyanuric, biuret, allophanate or polyol carbamate functional groups.

8. Composition according to claims 1 to 7, **characterized in that** the said nonmasked cycloaliphatic isooyanate exhibits a Tg at least equal to 40°C.

9. Composition according to claims 1 to 8, **characterized in that** the said cycloaliphatic isocyanate is an oligomer of a cycloaliphatic monomer having an average molecular mass at most equal to 2 000.

10. Composition according to claims 1 to 9, **characterized in that** the said cycloaliphatic isocyanate results from the homo- or from the heterotrimerization of a cycloaliphatic monomer.

11. Composition according to claims 9 and 10, **characterized in that** the said cycloaliphatic monomer is such that at least one, advantageously two, isocyanate functional group(s) is/are distant from the closest ring by at most one carbon and is/are preferably connected directly to it.

12. Composition according to claims 1 to 11, **characterized in that** the said nonmasked isocyanate compound exhibits at least one, advantageously two, isocyanate functional group(s) chosen from secondary, tertiary or neopentyl isocyanate functional groups.

13. Composition according to claims 1 to 12, **characterized in that** the (FI/MI) ratio by mass of the free isocyanate compound to the masked isocyanate compound is at least equal to 0.1, advantageously to 0.2, preferably to 0.3.

14. Composition according to claims 1 to 13, **characterized in that** the ratio (in equivalents) of the free isocyanate functional groups to the masked isocyanate functional groups is at most equal to approximately 1, advantageously to 1.0, preferably to 0.7.

15. Process for the preparation of a composition according to claims 1 to 14, **characterized in that** the free isocyanate is mixed in the molten masked isocyanate.

16. Use of cycloaliphatic compounds exhibiting free isocyanate functional groups with a glass transition temperature (Tg) at least equal to 40°C for raising the glass transition temperature (Tg) of masked aliphatic isocyanates.

17. Use of a composition according to claims 1 to 14 as ingredient of a coating, advantageously in the powder form.
